# EUROPEAN PATENT APPLICATION

(11) **EP 4 583 585 A1**
(43) Date of publication of application: **09.07.2025**
(21) Application number: 23867072.3
(22) Date of filing: 30.06.2023
(51) Int. Cl.: H04W 36/34

(54) **BLUETOOTH SWITCHING METHOD AND APPARATUS, AND BLUETOOTH DEVICE AND COMPUTER-READABLE MEDIUM**

(30) Priority: 21.09.2022 CN 202211153159
(71) Applicant: GUANGDONG OPPO MOBILE TELECOMMUNICATIONS CORP., LTD., Dongguan, Guangdong 523860 (CN)
(72) Inventor: HOU, Ruitian, Dongguan, Guangdong 523860 (CN)
(74) Representative: Novagraaf Technologies
(86) International application number: PCT/CN2023/104963
(87) International publication number: WO 2024/060777

(57) **Abstract**

A Bluetooth switching method and apparatus, and a Bluetooth device and a computer-readable medium. The method comprises: when a first Bluetooth connection has been established between an electronic device and a Bluetooth device, receiving prompt information by means of the first Bluetooth connection, the prompt information being used for indicating that the connection between the electronic device and the Bluetooth device is switched from the first Bluetooth connection to a second Bluetooth connection, wherein the first Bluetooth connection and the second Bluetooth connection are different Bluetooth connections; and in response to the prompt information, increasing the frequency of sending or scanning Bluetooth connection information by the Bluetooth device, wherein the Bluetooth connection information is applied to the establishment of the second Bluetooth connection.

## Description

### CROSS REFERENCE TO RELATED APPLICATIONS

The application claims priority to Chinese Patent Application No.202211153159.8, filed September 21 2022, entitled "BLUETOOTH SWITCHING METHOD AND APPARATUS, AND ELECTRONIC DEVICE AND COMPUTER READABLE MEDIUM", the entire contents of which are incorporated herein by reference.

### TECHNICAL FIELD

The present disclosure relates to the technical field of Bluetooth technologies, in particular, to a Bluetooth switching method, a Bluetooth switching apparatus, an electronic device, and a computer-readable medium.

### BACKGROUND

As people's lifestyles become more diverse, the number of electronic devices owned by users is increasing, and Bluetooth communication technology is advancing rapidly. Currently, a device may establish a Bluetooth connection with other devices. However, due to issues with the Bluetooth communication mechanism, the user experience when connecting devices is currently poor.

### SUMMARY

The present disclosure provides a Bluetooth switching method, a Bluetooth switching apparatus, an electronic device and a computer readable medium to address the above issues.

In a first aspect, some embodiments of the present disclosure provide a Bluetooth switching method applied in a Bluetooth device in a communication system, the communication system further includes an electronic device, and the method includes:
receiving, in a case where a first Bluetooth connection has been established between the electronic device and the Bluetooth device, prompt information through the first Bluetooth connection, where the prompt information is configured to indicate that a connection between the electronic device and the Bluetooth device should be switched from the first Bluetooth connection to a second Bluetooth connection, wherein the first Bluetooth connection and the second Bluetooth connection are different Bluetooth connections;
increasing, based on the prompt information, a frequency of sending or scanning Bluetooth connection information by the Bluetooth device, wherein the Bluetooth connection information is configured for establishing the second Bluetooth connection.

In a second aspect, some embodiments of the present disclosure provide a Bluetooth switching method, applied in an electronic device in a communication system, the communication system further includes a Bluetooth device, and the method includes:
sending, in a case where a first Bluetooth connection has been established between the electronic device and the Bluetooth device, prompt information to the Bluetooth device through the first Bluetooth connection, indicating the Bluetooth device should increase a frequency of sending or scanning Bluetooth connection information by the Bluetooth device,
wherein the Bluetooth connection information is applied to establish a second Bluetooth connection, and the prompt information is configured to indicate that the connection between the electronic device and the Bluetooth device should be switched from the first Bluetooth connection to a second Bluetooth connection, wherein the first Bluetooth connection and the second Bluetooth connection are different Bluetooth connections.

In a third aspect, some embodiments of the present disclosure provide a Bluetooth switching apparatus, applied to a Bluetooth device in a communication system, the communication system further includes an electronic device, and the apparatus includes:
an acquisition unit, configured to receive, in a case where a first Bluetooth connection has been established between the electronic device and the Bluetooth device, prompt information through the first Bluetooth connection, where the prompt information is configured to indicate that a connection between the electronic device and the Bluetooth device should be switched from the first Bluetooth connection to a second Bluetooth connection, wherein the first Bluetooth connection and the second Bluetooth connection are different Bluetooth connections; and
an adjustment unit, configured to increase, based on the prompt information, a frequency of the sending or scanning Bluetooth connection information by the Bluetooth device, wherein the Bluetooth connection information is applied to establish the second Bluetooth connection.

In a fourth aspect, some embodiments of the present disclosure provide a Bluetooth switching apparatus, applied to an electronic device in a communication system, the communication system further includes a Bluetooth device, and the apparatus includes:
a sending unit, configured to send, in a case where a first Bluetooth connection has been established between the electronic device and the Bluetooth device, prompt information to the Bluetooth device through the first Bluetooth connection, indicating the Bluetooth device should increase a frequency of sending or scanning Bluetooth connection information by the Bluetooth device, wherein the Bluetooth connection information is applied to establish the second Bluetooth connection, and the prompt information is configured to indicate that a connection between the electronic device and the Bluetooth device should be switched from the first Bluetooth connection to a second Bluetooth connection, wherein the first Bluetooth connection and the second Bluetooth connection are different Bluetooth connections.

In a fifth aspect, some embodiments of the present disclosure provide a Bluetooth device, applied to a communication system, the communication system further includes an electronic device, and the Bluetooth device includes:
one or more processors;
a memory;
one or more application programs, wherein the one or more application programs are stored in the memory and are configured to be executed by the one or more processors, and the one or more application programs are configured to perform the above methods.

In a sixth aspect, some embodiments of the present disclosure provide a computer-readable medium storing a program code executable by a processor, which, when executed by the processor, causes the processor to perform the above methods.

### BRIEF DESCRIPTION OF THE DRAWINGS

To illustrate the technical solutions of the embodiments of the present disclosure more clearly, a brief introduction to the drawings used in some embodiments of the present disclosure is provided below. It is evident that the drawings described below are only some of the embodiments of the present disclosure, and those skilled in the art may derive other drawings from these without creative effort.
FIG. 1 is a schematic view of a Bluetooth connection process in some embodiments of the present disclosure.
FIG. 2 is a schematic view of a Bluetooth mode switching process in some embodiments of the present disclosure.
FIG. 3 is a flowchart of a Bluetooth switching method in some embodiments of the present disclosure.
FIG. 4 is a structural block diagram of a communication system in some embodiments of the present disclosure.
FIG. 5 is a schematic view of a Bluetooth settings interface in some embodiments of the present disclosure.
FIG. 6 is another flowchart of a Bluetooth switching method in some embodiments of the present disclosure.
FIG. 7 is another flowchart of a Bluetooth switching method in some embodiments of the present disclosure.
FIG. 8 is another flowchart of the Bluetooth switching method in some embodiments of the present disclosure.
FIG. 9 is a schematic view of a Bluetooth mode switching process in some embodiments of the present disclosure.
FIG. 10 is a block diagram of a Bluetooth switching apparatus in some embodiments of the present disclosure.
FIG. 11 is another block diagram of a Bluetooth switching apparatus in some embodiments of the present disclosure.
FIG. 12 is a block diagram of the electronic device in some embodiments of the present disclosure.
FIG. 13 is a block diagram of the Bluetooth device in some embodiments of the present disclosure.
FIG. 14 is a storage unit for storing or carrying a program code implementing an image display method according to some embodiments of the present disclosure.
FIG. 15 is a block diagram of a computer product in some embodiments of the present disclosure.

### DETAILED DESCRIPTION

In order to enable those skilled in the art to better understand the technical solutions of the present disclosure, the technical solutions in the embodiments of the present disclosure will be described below in conjunction with the accompanying drawings. It is obvious that the described embodiments are only part of the embodiments of the present disclosure and not all of them. The components described and shown in the drawings of the present disclosure may be arranged and designed in various different configurations. Therefore, the detailed description of the embodiments provided in the drawings is not intended to limit the scope of the present disclosure but merely represents selected embodiments of the present disclosure. Any other embodiments obtained based on the embodiments of the present disclosure without any creative efforts should fall within the scope of protection of the present disclosure.

It should be noted that similar reference numbers and letters in the following drawings represent similar items. Therefore, once an item is defined in one drawing, it does not need further definition or explanation in subsequent drawings. At the same time, in the description of the present disclosure, the terms "first", "second", etc., are used merely for differentiation and should not be interpreted as indicating or implying relative importance.

The Internet of Things (IoT) is a network concept extending and expanding the user side to enable information exchange and communication between any objects. With the development of IoT technology, some scenarios may be configured in an IoT system. These configured scenarios may involve multiple intelligent devices, and there may be a certain interconnection between these devices, enabling them to work collaboratively. For example, a configured scenario may include that when one device approaches another device, at least one of the two devices will perform a specified operation. Alternatively, when one device performs a certain operation, part of the data from the operation is processed by itself, and the other part of the data is processed by another device.

As people's lifestyles become more diverse, the number of electronic devices owned by users is increasing, and Bluetooth communication technology is advancing rapidly. Currently, in order to facilitate users' work and life, an electronic device may establish a Bluetooth connection with an external device, enabling users to control the electronic device to send data to the connected device. The electronic device may be a smartphone, a tablet, an e-reader, a wireless audio playback device, a monitor, or other devices with internal Bluetooth modules that are capable of establishing a Bluetooth connection and exchanging data with other Bluetooth devices. The wireless audio playback device may include a Bluetooth headphone or a Bluetooth speaker, etc.

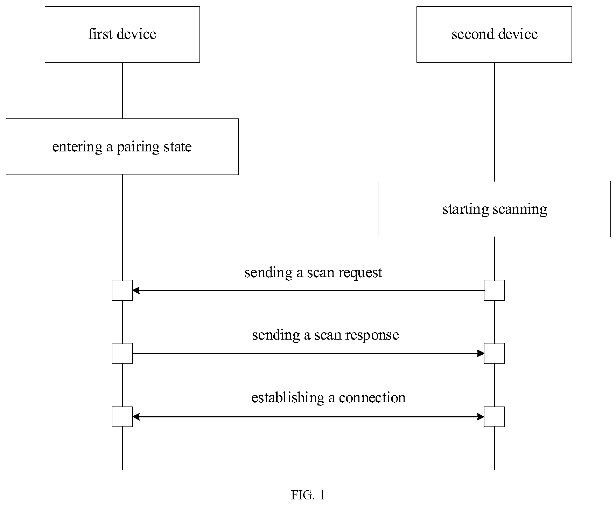

The process of establishing Bluetooth communication between two devices is briefly described below. As shown in FIG. 1, a first device and a second device are not connected with other devices via Bluetooth connections. When the second device wishes to establish a Bluetooth connection with the first device, the first device enters a pairing state so that the second device may scan the first device. Then, the second device obtains a Bluetooth address of the first device and establishes a connection with the first device. As shown in FIG. 1, when the first device enters the pairing state, the second device starts scanning the first device. For example, the second device may send a scan request via broadcasting, with a Bluetooth address of the second device being carried in the scan request. The first device responds to the scan request by sending a scan response based on the Bluetooth address of the second device. The second device parses the scan response, obtains the Bluetooth address of the first device, and then sends a connection request based on the Bluetooth address of the first device. The first device responds to the connection request and establishes a Bluetooth connection with the second device.

Currently, a Bluetooth protocol supports multiple Bluetooth communication modes. The multiple Bluetooth communication modes may include a classic Bluetooth mode and a low energy audio Bluetooth mode (LE Audio). The classic Bluetooth mode includes three sub-modes: Basic Rate (BR), Enhanced Data Rate (EDR), and High Speed (HS). The Basic Rate (BR) is also referred to as Bluetooth 1.0, the Enhanced Data Rate (EDR) is also called Bluetooth 2.0, and the High Speed (HS) is also called Bluetooth 3.0. The low energy audio Bluetooth mode operates under a low energy Bluetooth (BLE) mode for Bluetooth audio transmission. The low energy audio Bluetooth mode uses a new Low Complexity Communication Codec (LC3) to provide higher sound quality and lower power consumption. Compared to a classic Bluetooth audio encoding Sub-band Codec (SBC), the LC3 offers significantly improved encoding efficiency and quality, enabling the LE Audio to be more advanced than classic Bluetooth audio technology.

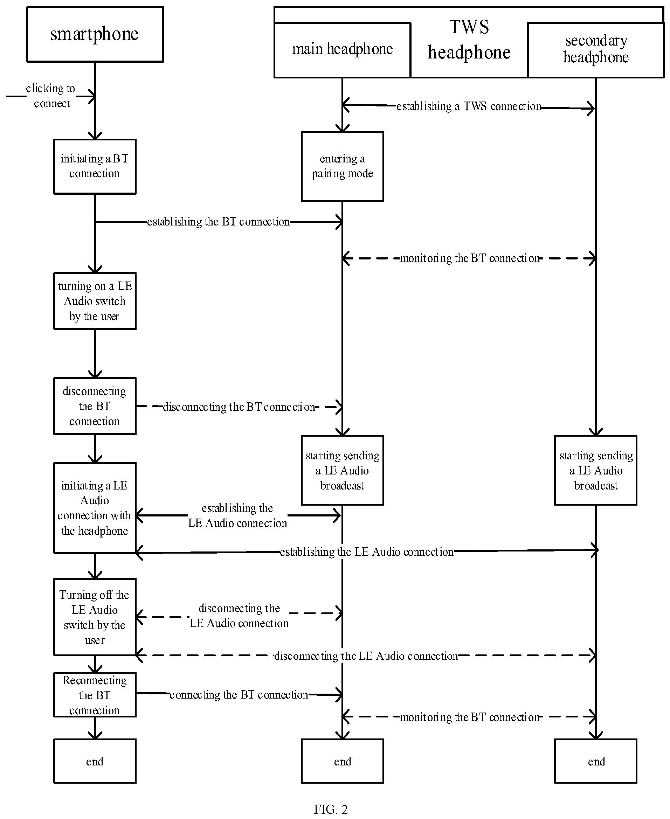

Since the Bluetooth communication between devices supports multiple Bluetooth modes, switching between these modes may easily cause issues such as lagging, long waiting time, or Bluetooth communication being interrupted. In some embodiments, as shown in FIG. 2, taking the Bluetooth connection between a smartphone and a wireless headphone as an example, it demonstrates the potential issues when switching between multiple Bluetooth modes. When the headphone supports both the LE Audio and the classic Bluetooth (BT), after the headphone enters the pairing state, the user may complete a simultaneous connection of the classic Bluetooth and the LE Audio by simply clicking on the Bluetooth interface. When the user turns on a LE Audio switch in a Bluetooth settings interface of the smartphone, the smartphone actively disconnects the currently established classic Bluetooth (BT) connection with the headphone and then initiates a LE Audio connection request to the headphone. After the smartphone scans a LE broadcast sent by both a main headphone and a secondary headphone, the LE Audio connection is established with the headphone. When the user turns off the LE Audio switch, the smartphone disconnects the current LE Audio connection with both the main headphone and the secondary headphone and then begins to reconnect the BT connection to complete the BT connection, enabling a dynamic switching between the BT and the LE Audio. It should be noted that actively disconnecting the currently established classic Bluetooth (BT) connection with the headphone may be understood as disconnecting the physical link of the classic Bluetooth connection, or it may also be understood as maintaining the physical link of the classic Bluetooth connection while disconnecting the logical link of the classic Bluetooth connection. Similarly, disconnecting the current LE Audio connection with both the main headphone and the secondary headphone may be understood as disconnecting the physical link of the LE Audio connection, or it may also be understood as maintaining the physical link of the LE Audio connection while disconnecting the logical link of the LE Audio connection.

The smartphone may also maintain a dual-mode state. In some embodiments, after the smartphone and the headphone have simultaneously established classic Bluetooth and LE Audio connections, when the user needs to use the LE Audio switch to transmit audio, the user may open the LE Audio switch in the Bluetooth settings interface of the smartphone. In this case, the smartphone maintains the currently established classic Bluetooth (BT) connection with the headphone, while initiating a LE Audio connection request to the headphone. After the smartphone scans the LE broadcasts sent by both the main headphone and the secondary headphone, the LE Audio connection is completed, and audio is transmitted using the LE Audio connection. When the user turns off the LE Audio switch, the smartphone maintains both the LE Audio connection and the classic Bluetooth connection with both the main headphone and the secondary headphone, and the user may choose to use the classic Bluetooth connection to transmit other data.

In some embodiments, the LE Audio connection relies on the underlying LE link connection. A method of the LE connection involves a central device (typically a smartphone, computer, or other electronic devices) scanning for Bluetooth low energy (BLE) broadcasts periodically sent by peripheral devices (such as a Bluetooth headphone, a wristband, etc.). Upon receiving the broadcast, the LE connection may be initiated. The central device generally does not remain a high-frequency BLE scan mode for an extended period because continuous high-frequency scanning occupies a large amount of Bluetooth bandwidth. This not only increases power consumption but also occupies 2.4G Wi-Fi time slots, leading to a decrease in Wi-Fi performance. Therefore, in most cases, the electronic device uses high-frequency scanning only in certain scenarios, such as when a Bluetooth interface is displayed on a screen of the device, which accelerates a scanning speed for BLE broadcasts. Similarly, the peripheral device may not continuously send high-frequency BLE broadcasts for an extended period. The peripheral device typically uses a very short broadcast period. Otherwise, a longer broadcast period would increase the power consumption of the headphone. A method of the classic Bluetooth connection involves an initiating device (such as a smartphone, a computer, etc.) sending a page request. At this time, an external device (such as a Bluetooth headphone, a wristband, etc.) enters the pairing mode and then enters a page scan state. During this time, the external device periodically enters the pairing mode, where a page scan interval refers to a period at which the external device periodically enters the pairing mode, and a page scan window refers to a duration of each pairing mode. Increasing the page scan window or decreasing the page scan interval may speed up a pairing process, but it also increases power consumption. Default Bluetooth parameters includes a page scan interval of 1.28s and a page scan window of 11.25ms or 22.5ms (two configurable modes).

However, the inventor discovered that when the electronic device switches Bluetooth communication modes, the default behavior is to first disconnect the currently established Bluetooth connection and then establish a new Bluetooth connection. For example, when switching from BT to LE Audio, the electronic device (such as a smartphone) first actively disconnects the BT connection with the Bluetooth device (such as a Bluetooth headphone) and then initiates a BLE Audio connection with the headphone. The same applies when switching from LE Audio to BT. If the time taken to reconnect to the required Bluetooth mode is too long, it leads to a poor overall switching experience, which significantly affects the user's actual experience. The same issue exists when switching from LE Audio to BT.

Therefore, in order to overcome the above-mentioned shortcomings, the embodiments of the present disclosure provide a Bluetooth switching method, a Bluetooth switching apparatus, an electronic device, and a computer-readable medium. When the electronic device prepares to switch networks, it may notify the Bluetooth device so that the Bluetooth device may set a first parameter that is targeted to reduce the time required to establish a second Bluetooth connection, thereby accelerating an establishment speed of the second Bluetooth connection between the electronic device and the Bluetooth device.

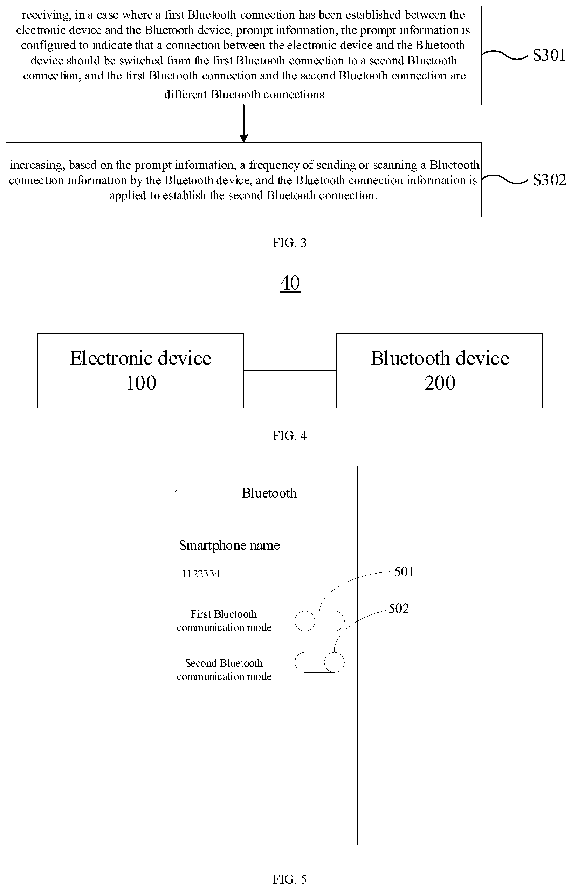

In some embodiments, as shown in FIG. 3, FIG. 3 is a Bluetooth switching method provided in some embodiment of the present disclosure. The method is applied to a communication system 40 as shown in FIG. 4. The communication system includes an electronic device 100 and a Bluetooth device 200. The electronic device 100 may be a smartphone, a tablet, an e-reader, or other devices capable of running applications. The Bluetooth device 200 may be a Bluetooth headphone, a Bluetooth speaker, a smart wearable device, or other devices. The electronic device 100 and the Bluetooth device 200 may communicate via Bluetooth, with both supporting various Bluetooth communication modes as previously mentioned, such as supporting both the BT and the LE Audio modes simultaneously. In some embodiments, the execution subject of the Bluetooth switching method shown in FIG. 3 is the Bluetooth device. The Bluetooth switching method includes operations executed by blocks S301 and S302.

At block S301, in a case where a first Bluetooth connection has been established between the electronic device and the Bluetooth device, prompt information is received, the prompt information is configured to indicate that a connection between the electronic device and the Bluetooth device should be switched from the first Bluetooth connection to a second Bluetooth connection, and the first Bluetooth connection and the second Bluetooth connection are different Bluetooth connections.

It should be noted that the establishment of a Bluetooth connection mentioned in the present disclosure may refer to the establishment of a physical link. In some embodiments, the establishment of a Bluetooth connection may also involve establishing Bluetooth audio transmission protocols such as the Advanced Audio Distribution Profile (A2DP) and Hands-Free Profile (HFP), or other data transmission protocols on the basis of the physical link. In some embodiments, the completion of Bluetooth connection establishment does not include establishing synchronous links (Synchronous Connection Oriented, SCO) or Connected Isochronous Streams (CIS) and other audio transmission channels, but instead, the SCO or the CIS audio transmission channels are only established when there is related audio service or under preset conditions. It may be understood that different Bluetooth communication modes apply to different Bluetooth protocols, and therefore, the corresponding physical links and related transmission protocols may vary. The relevant Bluetooth standards may be referenced. Specifically, in subsequent embodiments, the meaning of completing Bluetooth connection establishment is further explained based on specific application scenarios.

The first Bluetooth connection and the second Bluetooth connection correspond to different Bluetooth communication modes. For example, one of the Bluetooth communication modes of the first Bluetooth connection and the second Bluetooth connection is the classic Bluetooth mode, and the other is the low energy audio Bluetooth mode (i.e., the previously mentioned LE Audio mode). For example, the first Bluetooth connection corresponds to the classic Bluetooth mode, and the second Bluetooth connection corresponds to the low energy audio Bluetooth mode. Alternatively, the first Bluetooth connection may correspond to the low energy audio Bluetooth mode, and the second Bluetooth connection may correspond to the classic Bluetooth mode.

In some embodiments, in a case where the first Bluetooth connection has been established between the electronic device and the Bluetooth device, subsequent operations may be triggered by a specified request. The specified request may be configured to establish the second Bluetooth connection between the electronic device and the Bluetooth device. That is, when the electronic device detects the specified request, the electronic device sends the prompt information to the Bluetooth device via the first Bluetooth connection.

It should be noted that the specified request may be input by the user through the electronic device, or it may be input through the Bluetooth device, or it may be automatically triggered and generated under a preset application scenario. The preset application scenario may be a gaming scenario, a video playback scenario, or other preset scenarios. The present disclosure does not limit this. In some embodiments of the present disclosure, the specified request is taken as user input as an example. The user may input the specified request through the electronic device, or it may be input through the Bluetooth device. In some embodiments, the electronic device may display the Bluetooth settings interface. This Bluetooth settings interface may include switches for different Bluetooth communication modes, enabling the user to turn on or off the corresponding Bluetooth communication modes, thereby inputting the corresponding specified request. As shown in FIG. 5, the Bluetooth settings interface may include a first switch 501 corresponding to the first Bluetooth communication mode and a second switch 502 corresponding to the second Bluetooth communication mode. By setting the first switch to an "on" state, the Bluetooth connection corresponding to the first Bluetooth communication mode is requested to be established. By setting the second switch to the "on" state, the Bluetooth connection corresponding to the second Bluetooth communication mode between the electronic device and the Bluetooth device is requested to be established. Additionally, a specified switch may also be set in the Bluetooth settings interface. The default Bluetooth mode between the electronic device and the Bluetooth device is the first Bluetooth communication mode. When the specified switch is in the "on" state, the electronic device and the Bluetooth device establish the second Bluetooth connection based on the second Bluetooth communication mode. When the specified switch is in an "off" state, the electronic device and the Bluetooth device establish the first Bluetooth connection based on the first Bluetooth communication mode. Therefore, the specified request may be input via the second switch 502 or the specified switch.

After the electronic device detects the specified request, it sends the prompt information to the Bluetooth device. The prompt information is configured to notify a recipient that the electronic device requests to establish a second Bluetooth connection, that is, to initiate the switching of the first Bluetooth connection to the second Bluetooth connection. Therefore, after the Bluetooth device receives the prompt information, it understands that the electronic device requests to switch the first Bluetooth connection to the second Bluetooth connection. In some embodiments, the electronic device may send the prompt information to the Bluetooth device via the first Bluetooth connection. In some embodiments, the electronic device may send the prompt information to the Bluetooth device through a preset channel based on the first Bluetooth connection between the electronic device and the Bluetooth device. For example, when the first Bluetooth connection is a classic Bluetooth connection, the preset channel may be a Serial Port Profile (SPP), and the electronic device may send the prompt information to the Bluetooth device via the SPP private protocol channel using Attention (AT) commands. Alternatively, when the second Bluetooth connection is the low energy audio Bluetooth connection (i.e., LE Audio connection), the preset channel may be a Generic Attribute Profile (GATT) protocol channel.

At block S302, based on the prompt information, a frequency of sending or scanning Bluetooth connection information is increased by the Bluetooth device, and the Bluetooth connection information is applied to establish the second Bluetooth connection.

In some embodiments, the Bluetooth connection information may be sent or scanned between the electronic device and the Bluetooth device using a first communication parameter. Adjusting the first communication parameter may adjust the frequency of sending or scanning Bluetooth connection information by the Bluetooth device.

In some embodiments, since the specified request is detected by the electronic device and input by the user based on the electronic device, when the electronic device responds to the specified request, switching the first Bluetooth connection that has been established between the electronic device and the Bluetooth device to the second Bluetooth connection, the Bluetooth device may not be aware of a switching requirement from the electronic device. That is, the Bluetooth device may not know whether the electronic device actively disconnects the first Bluetooth connection or switches the first Bluetooth connection to the second Bluetooth connection. when it is an active disconnection, the electronic device simply disconnects the first Bluetooth connection without needing to immediately establish the second Bluetooth connection after disconnecting the first Bluetooth connection. When it is a switch from the first Bluetooth connection to the second Bluetooth connection, the electronic device needs to immediately establish the second Bluetooth connection after disconnecting the first Bluetooth connection. However, in either case, a time required to establish the second Bluetooth connection needs to be minimized to ensure that the second Bluetooth connection between the electronic device and the Bluetooth device is established as quickly as possible. Therefore, after detecting the specified request, the electronic device sends the prompt information to the Bluetooth device, so that the Bluetooth device becomes aware of the switching requirement of the Bluetooth connection of the electronic device. This increases the frequency of sending or scanning the Bluetooth connection information by the Bluetooth device, thereby reducing the time required to establish the second Bluetooth connection.

In some embodiments, the first communication parameter is applied during a process of establishing the second Bluetooth connection between the Bluetooth device and the electronic device. The Bluetooth device is configured to use the first communication parameter to send or scan the Bluetooth connection information. The Bluetooth connection information is configured to establish the second Bluetooth connection. For example, the Bluetooth connection information may be a page request for establishing the classic Bluetooth connection or a broadcast for establishing the LE Audio connection, etc. By adjusting the first communication parameter, the frequency of sending or scanning the Bluetooth connection information may be increased by the Bluetooth device, thereby improving the speed of establishing the second Bluetooth connection and reducing the time required to establish the second Bluetooth connection.

It should be noted that the first communication parameter may include a first parameter and a second parameter. The first parameter and second parameter are specific values of the first communication parameter. The first communication parameter used by the Bluetooth device after the Bluetooth device responds to the prompt information is the second parameter. That is, before the Bluetooth device receives the prompt information, and in a case where the first Bluetooth connection has been established between the electronic device and the Bluetooth device, the Bluetooth device executes the operation of sending or scanning the Bluetooth connection information. Before the Bluetooth device receives the prompt information, the first communication parameter used in a case where the first Bluetooth connection has been established between the electronic device and the Bluetooth device is the first parameter. For example, the first communication parameter may be the sending interval of the Bluetooth connection information. The sending interval of the Bluetooth connection information during the period when the first Bluetooth connection has been established between the electronic device and the Bluetooth device, but the prompt information is not received, is T1, i.e., the first parameter is T1. Additionally, the first parameter may also refer to a default value of the first communication parameter, i.e., in scenarios where the second parameter is not used, the Bluetooth device defaults to using the first parameter to send or scan the Bluetooth connection information.

Therefore, in some embodiments of the present disclosure, the Bluetooth device may, at the necessary moment, i.e., when it receives the prompt information and understands that the electronic device requests the establishment of the second Bluetooth connection between the electronic device and the Bluetooth device, increase the frequency of sending or scanning the Bluetooth connection information. This involves changing the first communication parameter from the first parameter to the second parameter, which not only reduces the time required to establish the second Bluetooth connection, enabling the switch from the first Bluetooth connection to the second Bluetooth connection to be faster, but also avoids excessive power consumption caused by the prolonged use of the first parameter. That is, during the period when the first Bluetooth connection has been established between the electronic device and the Bluetooth device, and the specified request is not received by the electronic device, the Bluetooth device may use an initial parameter to send or scan the Bluetooth connection information instead of using the first parameter. For example, the initial parameter may be considered as the default parameter for the Bluetooth device.

It should be noted that the following will describe the embodiments of setting the first parameter for the Bluetooth device, specifically for the classic Bluetooth connection and the LE Audio connection.

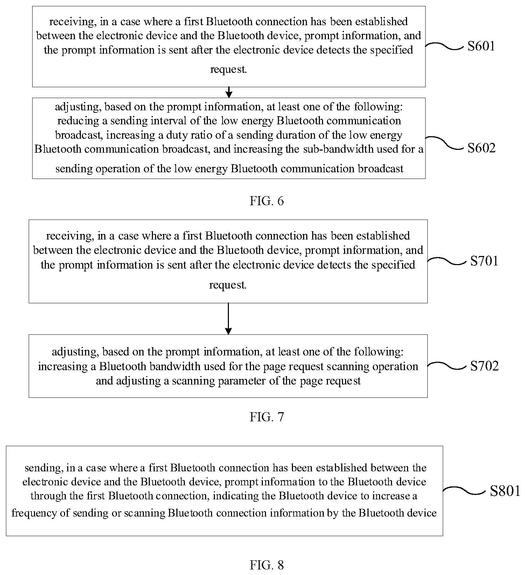

Referring to FIG. 6, FIG. 6 shows a Bluetooth switching method provided in some embodiments of the present disclosure. The method is applied to the communication system 40 as shown in FIG. 4. In some embodiments, the execution subject of the Bluetooth switching method shown in FIG. 6 is the Bluetooth device. The Bluetooth switching method includes operations executed by blocks S601 and S602.

At block S601, in a case where a first Bluetooth connection has been established between the electronic device and the Bluetooth device, prompt information is received, and the prompt information is sent after the electronic device detects the specified request.

At block S602, based on the prompt information, at least one of the following is adjusted: reducing a sending interval of the low energy Bluetooth communication broadcast, increasing a duty ratio of a sending duration of the low energy Bluetooth communication broadcast, and increasing the sub-bandwidth used for a sending operation of the low energy Bluetooth communication broadcast.

In some embodiments of the present disclosure, the Bluetooth communication mode corresponding to the first Bluetooth connection is the classic Bluetooth mode. The Bluetooth communication mode corresponding to the second Bluetooth connection is the low energy Bluetooth communication mode. The Bluetooth connection information includes the low energy Bluetooth communication broadcast used to establish the low energy Bluetooth communication. The Bluetooth device sends the low energy Bluetooth communication broadcast based on the first parameter. Therefore, in some embodiments, the first communication parameter includes at least one of the following: the sending interval of the low energy Bluetooth communication broadcast, the duty ratio of the sending duration of the low energy Bluetooth communication broadcast, and the sub-bandwidth used for the sending operation of the low energy Bluetooth communication broadcast. The embodiments for increasing the frequency of sending the Bluetooth connection information by the Bluetooth device includes at least one of the following: reducing the sending interval of the low energy Bluetooth communication broadcast, increasing the duty ratio of the sending duration of the low energy Bluetooth communication broadcast, and increasing the sub-bandwidth used for the sending operation of the low energy Bluetooth communication broadcast.

In some embodiments, the first Bluetooth connection may be established by the electronic device or by the Bluetooth device. The second Bluetooth connection is established by the electronic device. That is, the electronic device needs to scan the Bluetooth device's broadcast before establishing the second Bluetooth connection. In some embodiments, the method for establishing the second Bluetooth connection between the electronic device and the Bluetooth device is as follows: in a case where the first Bluetooth connection between the electronic device and the Bluetooth device is maintained in a connected state, the Bluetooth device continuously sends low energy Bluetooth communication broadcasts, which are used for establishing the second Bluetooth connection. The electronic device scans the low energy Bluetooth communication broadcasts sent by the Bluetooth device and establishes the second Bluetooth connection between the electronic device and the Bluetooth device based on the low energy Bluetooth communication broadcasts. For example, the broadcasts carry the Bluetooth address of the Bluetooth device, and the electronic device parses the broadcasts to obtain the Bluetooth address of the Bluetooth device, and then establishes the second Bluetooth connection based on that Bluetooth address.

When the user turns on the LE Audio switch, the smartphone may detect that the LE Audio switch is in the "on" state. For example, the LE Audio switch corresponds to the second switch 502 in the aforementioned interface. When the LE Audio switch is turned on, it triggers a first request. The first request is configured to indicate the establishment of the LE Audio connection (i.e., the second Bluetooth connection) between the electronic device and the Bluetooth device. The headphone, based on the specified request, begins to scan the LE Audio broadcast (i.e., the low energy Bluetooth communication broadcast) sent by the headphone. The LE Audio broadcast includes an access address of the headphone in low energy audio Bluetooth mode. Then, the headphone establishes the LE Audio connection with the headphones based on the LE Audio broadcast. It should be noted that the Bluetooth headphone includes the main headphone and the secondary headphone. The smartphone scans and obtains the LE Audio broadcast sent by the main headphone and the LE Audio broadcast sent by the secondary headphone, and establishes the LE Audio connection between the smartphone and the main headphone, as well as the LE Audio connection between the smartphone and the secondary headphone. Afterward, the smartphone disconnects the classic Bluetooth connection between the smartphone and the headphone. At this time, the Bluetooth connection between the smartphone and the Bluetooth headphone is the LE Audio connection.

From the above content, it may be seen that when the electronic device needs to switch the classic Bluetooth connection between the electronic device and the Bluetooth device to the LE Audio connection, the Bluetooth device needs to periodically send LE Audio broadcasts, and the electronic device needs to periodically scan these LE Audio broadcasts. Although the electronic device maintains the classic Bluetooth connection with the Bluetooth device without requesting to establish an LE Audio connection, the electronic device scans the LE Audio broadcasts and the Bluetooth device also sends LE Audio broadcasts. As mentioned earlier, the Bluetooth device sends the LE Audio broadcast using the first parameter. However, the first parameter may cause the time required to complete the establishment of the LE Audio connection to be too long. Therefore, to reduce the time required to establish the second Bluetooth connection, the Bluetooth device adjusts at least one of the following: reducing the sending interval of the low energy Bluetooth communication broadcast, increasing the duty ratio of the sending duration of the low energy Bluetooth communication broadcast, and increasing at least one of the sub-bandwidths used for the sending operation of the low energy Bluetooth communication broadcast. In some embodiments, the sending interval of the low energy Bluetooth communication broadcast may represent the time length between the transmission of two adjacent low energy Bluetooth communication broadcasts. The larger the sending interval of the low energy Bluetooth communication broadcast, the more broadcasts may be sent within a unit of time, making it easier for the electronic device to scan the broadcast more quickly. Thus, the sending interval of the low energy Bluetooth communication broadcast is positively correlated with the time required to establish the second Bluetooth connection. That is, the longer the sending interval of the low energy Bluetooth communication broadcast, the longer the time required to establish the second Bluetooth connection. The duty ratio of the sending duration of the low energy Bluetooth communication broadcast represents a proportion of the sending duration of the low energy Bluetooth communication broadcast in a unit of time. In other words, the duty ratio of the sending duration of the low energy Bluetooth communication broadcast may represent the sending duration within a single transmission period. Since the longer the sending duration of the low energy Bluetooth communication broadcast, the higher the probability of it being scanned by the electronic device, the duty ratio of the sending duration of the low energy Bluetooth communication broadcast is negatively correlated with the time required to establish the second Bluetooth connection. That is, the longer the duty ratio of the sending duration of the low energy Bluetooth communication broadcast, the shorter the time required to establish the second Bluetooth connection.

In some embodiments, an adv interval refers to the sending interval of the low energy Bluetooth communication broadcast. Assuming that in the first parameter, the sending interval of the low energy Bluetooth communication broadcast is a second interval, and in the second parameter, the sending interval of the low energy Bluetooth communication broadcast is a first interval, where the first interval is shorter than the second interval. That is, when the classic Bluetooth connection has been established between the electronic device and the Bluetooth device, the Bluetooth device sends the low energy Bluetooth communication broadcast at the second interval, in a case where the electronic device receives the specified request and informs the Bluetooth device via the prompt information, the Bluetooth device shortens the second interval to the first interval. Similarly, in the first parameter, the duty ratio of the sending duration of the low energy Bluetooth communication broadcast is a second duration, and in the second parameter, the duty ratio of the sending duration of the low energy Bluetooth communication broadcast is a first duration, where the first duration is longer than the second duration. When the classic Bluetooth connection has been established between the electronic device and the Bluetooth device, the Bluetooth device sends the low energy Bluetooth communication broadcast at the second duration, if the electronic device receives the specified request and informs the Bluetooth device via the prompt information, the Bluetooth device increases the second duration to the first duration. It should be noted that the protocol for low energy Bluetooth communication mode specifies the range of allowable values for the sending interval of the low energy Bluetooth communication broadcast. Therefore, reducing the sending interval of the low energy Bluetooth communication broadcast includes setting the sending interval of the low energy Bluetooth communication broadcast to a minimum interval allowed by the protocol for the low energy Bluetooth communication mode.

It should be noted that the aforementioned second interval may be considered as a default interval for the Bluetooth device, and the second duration may be considered as a default duration for the Bluetooth device. Therefore, the method for setting the first parameter by the Bluetooth device may be viewed as reducing the default interval to the minimum interval and setting the default duration to a maximum duration. In some embodiments of the present disclosure, the first duration is 20ms, and the first interval is 5 minutes.

In some embodiments, the method for adjusting the first parameter, in addition to reducing the sending interval of the low energy Bluetooth communication broadcast and increasing the duty ratio of the sending duration of the low energy Bluetooth communication broadcast, may also include increasing the sub-bandwidth used for the sending operation of the low energy Bluetooth communication broadcast. In some embodiments, assuming that after the electronic device sends the prompt information, the electronic device disconnects the first Bluetooth connection, it may trigger the Bluetooth device to scan the page request sent by the electronic device. Both the scanning operation and the sending operation of the low energy Bluetooth communication broadcast occupy Bluetooth bandwidth. Since the Bluetooth bandwidth is limited, the sending operation of the low energy Bluetooth communication broadcast, the page request scanning operation, and other operations are alternately executed in different time slots within the Bluetooth bandwidth. That is, each operation corresponds to a sub-bandwidth. If one operation is stopped, the sub-bandwidth corresponding to that operation may be used for executing the sending operation of the low energy Bluetooth communication broadcast, thereby increasing the sub-bandwidth for the sending operation of the low energy Bluetooth communication broadcast. This enables the electronic device to scan the low energy Bluetooth communication broadcast more easily. Therefore, the embodiments for increasing the sub-bandwidth used for the sending operation of the low energy Bluetooth communication broadcast is to stop a preset operation and use the sub-bandwidth corresponding to that preset operation for the page request scanning operation. In this case, the preset operation and the sending operation of the low energy Bluetooth communication broadcast share the Bluetooth bandwidth. In some embodiments of the present disclosure, the preset operation may be the page request scanning operation. As may be understood, reducing the sending interval of the low energy Bluetooth communication broadcast, increasing the duty ratio of the sending duration of the low energy Bluetooth communication broadcast, and increasing the sub-bandwidth used for the sending operation of the low energy Bluetooth communication broadcast all contribute to increasing the frequency of the Bluetooth device sending the low energy Bluetooth communication broadcast.

Referring to FIG. 7, FIG. 7 shows a Bluetooth switching method provided in some embodiments of the present disclosure. The method is applied to the communication system 40 as shown in FIG. 4. In some embodiments, the execution subject of the Bluetooth switching method shown in FIG. 7 is the Bluetooth device. The Bluetooth switching method includes operations executed by blocks S701 and S702.

At S701, in a case where a first Bluetooth connection has been established between the electronic device and the Bluetooth device, prompt information is received, and the prompt information is sent after the electronic device detects the specified request.

At S702, based on the prompt information, at least one of the following is adjusted: increasing a Bluetooth bandwidth used for the page request scanning operation and adjusting a scanning parameter of the page request. The scanning parameter includes at least one of a scanning interval and a scanning duration.

In some embodiments of the present disclosure, the Bluetooth communication mode corresponding to the first Bluetooth connection is the low energy Bluetooth communication mode. The Bluetooth communication mode corresponding to the second Bluetooth connection is the classic Bluetooth communication mode. The Bluetooth connection information includes the page request used to establish the classic Bluetooth communication. The Bluetooth device uses the first communication parameter to scan the page request sent by the electronic device. The first communication parameter may include a specified bandwidth and the scanning parameter for the page request, where the specified bandwidth refers to the Bluetooth bandwidth applied to the page request scanning operation, and the scanning parameter include at least one of the scanning interval and the scanning duration. Therefore, in some embodiments, the first communication parameter includes at least one of the specified bandwidth and the scanning parameter for the page request. The embodiments for increasing the frequency of the Bluetooth device scanning Bluetooth connection information includes increasing the sub-bandwidth applied to at least one of the page request scanning operation and adjusting the scanning parameter for the page request.

Assuming that the electronic device is a smartphone and the Bluetooth device is a Bluetooth headphone, the method for establishing a classic Bluetooth connection between the electronic device and the Bluetooth device may be as follows: the Bluetooth headphone includes the pairing state, and when the Bluetooth headphone is in the pairing state, the Bluetooth headphone may be discovered by other devices. When other devices have never established a Bluetooth connection with the Bluetooth headphone or have not previously obtained the Bluetooth address of the headphone, they need to pair with the headphone. That is, through the pairing process, the Bluetooth headphone and a device requesting for connection exchange communication information. The communication information includes data such as the communication address used to establish the connection. Therefore, for a new device, the Bluetooth headphone may only be scanned by other devices when it is in the pairing state after which the pairing with the other devices may be completed to obtain the Bluetooth address. For example, when the smartphone detects that a connection button is clicked, the Bluetooth headphone enters pairing mode. When the Bluetooth headphone is in the pairing mode, the smartphone begins to scan for the headphone. For example, the smartphone may send the scan request via broadcasting, with the Bluetooth address of the smartphone carried in the scan request. The Bluetooth headphone responds to the scan request and sends the scan response to the smartphone based on the Bluetooth address of the smartphone. The smartphone then parses the scan response to obtain the Bluetooth address of the headphone. The smartphone then sends a connection request based on the Bluetooth address of the headphone, and the Bluetooth headphone responds to the connection request and establishes the Bluetooth connection with the smartphone. In some embodiments, the classic Bluetooth connection is established between the headphone and the main headphone, and the secondary headphone monitors the classic Bluetooth connection between the headphone and the main headphone. In other words, the data sent from the headphone to the main headphone via the classic Bluetooth connection may also be obtained by the secondary headphone through monitoring.

When the Bluetooth connection between the smartphone and the Bluetooth headphone is the LE Audio connection, if the LE Audio switch is switched to the "off" state, the second request is detected, and the second request is used to indicate the establishment of the classic Bluetooth connection between the electronic device and the Bluetooth device, i.e., the second request serves as the specified request. As a result, the smartphone establishes the classic Bluetooth connection between the electronic device and the Bluetooth headphone. In some embodiments, the smartphone reconnects the BT. After establishing the classic Bluetooth connection between the smartphone and the Bluetooth headphone, the smartphone may generate a connection record. The connection record may include the Bluetooth address of the Bluetooth headphone, so that next time the smartphone may directly reconnect with the Bluetooth headphone based on the Bluetooth address. Here, "reconnect" refers to the operation where the headphone sends a page packet to the Bluetooth headphone to request the establishment of the classic Bluetooth connection. The page operation is commonly known as a "paging" operation. It refers to the operation of connecting or activating a user terminal. A device (the master device) that knows the address of the device to connect to may directly initiate the page. Once the reconnection is successful, i.e., the classic Bluetooth connection between the smartphone and the Bluetooth headphone is successfully established, the smartphone disconnects the LE Audio connection.

In some embodiments, the method for increasing the frequency of Bluetooth device scanning Bluetooth connection information includes at least one of increasing the sub-bandwidth applied to the page request scanning operation and adjusting the scanning parameters of the page request. The scanning parameter includes at least one of the scanning interval and the scanning duration.

In some embodiments, assuming that after the electronic device sends the prompt information, the electronic device disconnects the first Bluetooth connection, it may trigger the Bluetooth device to perform the sending operation of the low energy Bluetooth communication broadcast. Both the sending operation of the low energy Bluetooth communication broadcast and the scanning operation and occupy Bluetooth bandwidth. Since the Bluetooth bandwidth is limited, the sending operation of the low energy Bluetooth communication broadcast, the page request scanning operation, and other operations are alternately executed in different time slots within the Bluetooth bandwidth. That is, each operation corresponds to a sub-bandwidth. If one operation is stopped, the sub-bandwidth corresponding to that operation may be used for executing the sending operation of the low energy Bluetooth communication broadcast, thereby increasing the sub-bandwidth for the sending operation of the low energy Bluetooth communication broadcast. This enables the electronic device to scan the low energy Bluetooth communication broadcast more easily. Therefore, the embodiments for increasing the sub-bandwidth applied to the page request scanning operation is to stop a first operation and allocate the sub-bandwidth corresponding to the first operation for the page request scanning operation. In this case, the first operation and the sending operation of the low energy Bluetooth communication broadcast share Bluetooth bandwidth. In this embodiment of the present disclosure, the first operation is the sending operation of the low energy Bluetooth communication broadcast.

For example, adjusting the scanning parameter of the page request includes at least one of reducing a scanning interval of the page request and increasing a scanning duration of the page request.

In some embodiments, the scanning interval of the page request represents a time length between continuous scans of two adjacent page request intervals. The larger the scanning interval of the page request, the fewer a number of scans performed in a unit of time, making it less likely for the Bluetooth device to scan the page request more quickly. Therefore, the scanning interval of the page request is positively correlated with the time required to establish the second Bluetooth connection. That is, the longer the scanning interval of the page request, the longer the time required to establish the second Bluetooth connection. The scanning duration of the page request represents a proportion of the scanning duration of the page request within a unit of time. In other words, the scanning duration of the page request represents a scanning duration of the page request within a single transmission cycle. Since the longer the scanning duration of the page request, the higher a probability of scanning the page request, the scanning duration of the page request is negatively correlated with the time required to establish the classic Bluetooth connection. That is, the longer the scanning duration of the page request, the shorter the time required to establish the second Bluetooth connection (i.e., the classic Bluetooth connection).

In some embodiments, the page scan interval refers to the scanning interval of the page request, and the page scan window refers to the scanning duration of the page request. As mentioned earlier, in some embodiments, the first parameter may be the default parameter of the Bluetooth device. If the electronic device receives the specified request and informs the Bluetooth device via the prompt information, the Bluetooth device modifies the default parameter to the second parameter in order to accelerate the speed at which the Bluetooth device scans the page request sent by the electronic device, thereby reducing the time required to establish the second Bluetooth connection.

Referring to FIG. 8, FIG. 8 is a Bluetooth switching method provided in some embodiments of the present disclosure. The method is applied to the communication system 40 as shown in FIG. 4. In some embodiments, the execution subject of the Bluetooth switching method shown in FIG. 8 is the Bluetooth device. The Bluetooth switching method includes operations executed by block S801.

At block S801, in a case where a first Bluetooth connection has been established between the electronic device and the Bluetooth device, prompt information is sent to the Bluetooth device through the first Bluetooth connection, indicating the Bluetooth device to increase a frequency of sending or scanning Bluetooth connection information by the Bluetooth device.

The Bluetooth connection information is configured for establishing the second Bluetooth connection. The prompt information is configured to indicate that the connection between the electronic device and the Bluetooth device switches from the first Bluetooth connection to the second Bluetooth connection, where the first Bluetooth connection and the second Bluetooth connection are different Bluetooth connections.

It should be noted that embodiments of S801 may refer to the previous embodiments and will not be repeated here.

In some embodiments, between the electronic device and the Bluetooth device, one typically acts as a sender of the Bluetooth connection information, and the other as a scanner of the Bluetooth connection information. Therefore, when the electronic device notifies the Bluetooth device to adjust the first communication parameter, the electronic device may also adjust a second communication parameter it uses. For example, the electronic device may scan or send Bluetooth connection information based on the second communication parameter. In some embodiments, if the Bluetooth device sends the Bluetooth connection information based on the first communication parameter, the electronic device scans the Bluetooth connection information based on the second communication parameter. Conversely, if the Bluetooth device scans the Bluetooth connection information based on the first communication parameter, the electronic device sends the Bluetooth connection information based on the second communication parameter.

Referring to the previous embodiments of the specified request, the electronic device may detect the specified request after the first Bluetooth connection has been established between the electronic device and the Bluetooth device. Based on the specified request, the electronic device sends the prompt information to the Bluetooth device through the first Bluetooth connection, indicating the Bluetooth device should increase the frequency of sending or scanning the Bluetooth connection information. In some embodiments of the present disclosure, the electronic device may adjust the second communication parameter when certain preset conditions are met. These preset conditions may be that after the electronic device sends the prompt information to the Bluetooth device, or that after the electronic device detects the specified request.

Additionally, similar to the first communication parameter, the second communication parameter may include a third parameter and a fourth parameter, where the third parameter and the fourth parameter are specific values of the second communication parameter. When the preset conditions are not met, the second communication parameter used by the electronic device is the third parameter. That is, when the electronic device does not detect the specified request or detects the specified request but does not send the prompt information to the Bluetooth device, the electronic device still performs the operation of sending or scanning the Bluetooth connection information. In this case, the second communication parameter used by the electronic device is the third parameter. For example, when the second communication parameter is the scanning interval of Bluetooth connection information. The scanning interval of Bluetooth connection information when the electronic device does not detect the specified request, or detects the specified request but does not send the prompt information to the Bluetooth device, is T2, then the third parameter is T2. Furthermore, when the preset conditions are met, the second communication parameter used by the electronic device is the fourth parameter. That is, the electronic device may change the second communication parameter from the third parameter to the fourth parameter when the specified request is detected. Alternatively, the electronic device may change the second communication parameter from the third parameter to the fourth parameter after sending the prompt information to the Bluetooth device or after sending prompt information to the Bluetooth device.

In some embodiments, the Bluetooth communication mode corresponding to the first Bluetooth connection is the classic Bluetooth mode. The Bluetooth communication mode corresponding to the second Bluetooth connection is the low energy Bluetooth communication mode. The aforementioned Bluetooth connection information includes the low energy Bluetooth communication broadcast used to establish the low energy Bluetooth communication. The Bluetooth device sends the low energy Bluetooth communication broadcast based on the first parameter, and the electronic device scans the low energy Bluetooth communication broadcast based on the second communication parameter. The second communication parameter may include at least one of the sending interval of the low energy Bluetooth communication broadcast and the sending duration of the low energy Bluetooth communication broadcast. The second communication parameter may also include the scanning speed of the low energy Bluetooth communication broadcast. In this case, the third parameter is a first scanning speed of the low energy Bluetooth communication broadcast, and the fourth parameter is a second scanning speed of the low energy Bluetooth communication broadcast, where the first scanning speed is smaller than the second scanning speed. The embodiments for increasing the frequency of scanning Bluetooth connection information by the electronic device includes increasing the scanning speed of the low energy Bluetooth communication broadcast. For example, the interval of the electronic device scanning the low energy Bluetooth communication broadcast may be referred to as a broadcast scan interval. In this case, the broadcast scan interval may be reduced. Alternatively, a scanning frequency of the low energy Bluetooth communication broadcast may be increased.

In some embodiments, the Bluetooth communication mode corresponding to the first Bluetooth connection is the low energy Bluetooth communication mode. The Bluetooth communication mode corresponding to the second Bluetooth connection is the classic Bluetooth communication mode. The Bluetooth connection information includes the page request used to establish the classic Bluetooth communication. The second communication parameter includes the sub-bandwidth applied to the page request sending operation. In this case, the third parameter is a first sub-bandwidth used for the page request sending operation, and the fourth parameter is a second sub-bandwidth used for the page request sending operation, where the second sub-bandwidth is higher than the first sub-bandwidth. The embodiments for adjusting the second parameter include increasing the sub-bandwidth applied to the page request sending operation. When the electronic device disconnects the LE Audio connection, it may trigger the scanning of the low energy Bluetooth communication broadcast sent by the Bluetooth device. Both the page request sending operation and the scanning operation of the low energy Bluetooth communication broadcast occupy Bluetooth bandwidth. Since the Bluetooth bandwidth is limited, the scanning operation of the low energy Bluetooth communication broadcast, the page request sending operation, and other operations are alternately executed in different time slots within the Bluetooth bandwidth, with each operation corresponding to a sub-bandwidth. When one operation is stopped, the sub-bandwidth corresponding to that operation may be used for executing the page request sending operation, thereby increasing the sub-bandwidth for the page request sending operation and enabling the electronic device to send page requests more frequently. Thus, the embodiments for increasing the sub-bandwidth applied to the page request sending operation include stopping the second operation and allocating the sub-bandwidth corresponding to the second operation for the page request sending operation. In this case, the second operation and the page request sending operation share Bluetooth bandwidth. In some embodiments of the present disclosure, the second operation is the scanning operation of the low energy Bluetooth communication broadcast.

It should be noted that after the electronic device sends the prompt information to the Bluetooth device, it may disconnect the first Bluetooth connection. Then the second communication parameter may be adjusted from the third parameter to the fourth parameter. Subsequently, the Bluetooth device sends the low energy Bluetooth communication broadcast based on the adjusted first communication parameter (i.e., the second parameter), and the electronic device scans the low energy Bluetooth communication broadcast based on the adjusted second communication parameter (i.e., the fourth parameter). In the case where the second Bluetooth connection corresponds to the low energy Bluetooth communication mode, the electronic device disconnects the first Bluetooth connection and increases the scanning speed of the low energy Bluetooth communication broadcast. For the case where the second Bluetooth connection corresponds to the classic Bluetooth communication mode, the electronic device disconnects the first Bluetooth connection and increases the sub-bandwidth applied to the page request sending operation. It is also possible to first adjust the second communication parameter, and after the electronic device and Bluetooth device establish the second Bluetooth connection based on the second parameter and the first communication parameter, respectively, the first Bluetooth connection may then be disconnected.

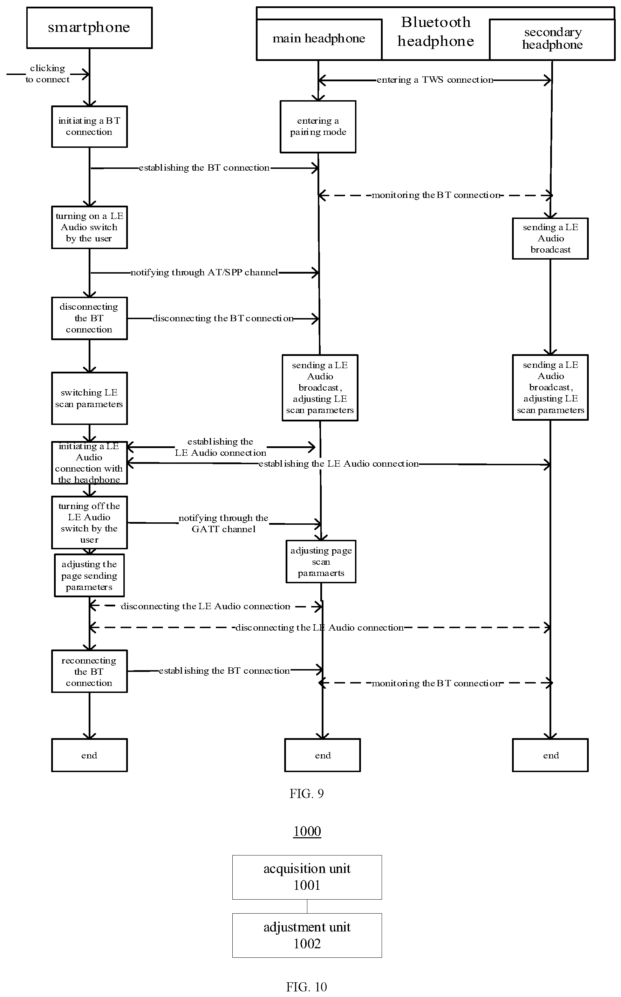

As shown in FIG. 9, assuming that the electronic device is a smartphone and the Bluetooth device is a Bluetooth headphone, when the smartphone detects that a connection button is clicked, the Bluetooth headphone enters the pairing mode. When the Bluetooth headphone enters the pairing mode, the smartphone begins scanning for the Bluetooth headphone. For example, it may send a scan request via broadcasting, with the Bluetooth address of the smartphone carried in the scan request. The Bluetooth headphone responds to the scan request and sends a scan response to the smartphone based on the Bluetooth address of the smartphone. The smartphone then parses the scan response and obtains the Bluetooth address of the headphone. Afterward, the smartphone sends a connection request based on the Bluetooth address of the headphone, and the Bluetooth headphone responds to the connection request and establishes a Bluetooth connection with the smartphone. In some embodiments, the classic Bluetooth connection is established between the headphone and the main headphone. The secondary headphone listens to the classic Bluetooth connection between the headphone and the main headphone. In other words, the data sent from the headphone to the main headphone via the classic Bluetooth connection may also be obtained by the secondary headphone through listening.

When the user turns on the LE Audio switch, the smartphone may detect that the LE Audio switch is in the "on" state. For example, the LE Audio switch corresponds to the second switch 502 in the interface mentioned above. When the LE Audio switch is turned on, the first request is triggered. The first request is used to indicate the establishment of the LE Audio connection (i.e., the second Bluetooth connection) between the electronic device and the Bluetooth device. The electronic device sends the first information to the Bluetooth device through the AT/SPP channel. This first information notifies the Bluetooth device that the electronic device requests to switch to the LE Audio connection. Subsequently, the Bluetooth device adjusts the broadcast parameters. In some embodiments, the Bluetooth device performs at least one of reducing the sending interval of the low energy Bluetooth communication broadcast and increasing the sending duration of the low energy Bluetooth communication broadcast. The electronic device adjusts the LE scan parameters. In some embodiments, the electronic device increases the scanning speed of the low energy Bluetooth communication broadcast. Then, the LE Audio connection is established between the electronic device and the Bluetooth device.

When the Bluetooth connection between the smartphone and the Bluetooth headphone is an LE Audio connection, if the LE Audio switch is switched to the "off" state and the second request is detected, which is used to indicate the establishment of the classic Bluetooth connection between the electronic device and the Bluetooth device, the electronic device sends the second information to the Bluetooth device through the GATT channel. This second information is configured to notify the Bluetooth device that the electronic device requests to switch to the classic Bluetooth connection. Then, the Bluetooth device adjusts page scan parameters. In some embodiments, the Bluetooth device performs at least one of increasing the sub-bandwidth applied to the page request scanning operation and adjusting at least one of the scanning parameters of the page request. The at least one of the scanning parameters includes the scanning interval and the scanning duration. The electronic device adjusts the page sending parameters. In some embodiments, the electronic device increases the sub-bandwidth applied to the page request sending operation. Then, the classic Bluetooth connection is established between the electronic device and the Bluetooth device.

Referring to FIG. 10, FIG. 10 is a block diagram of a Bluetooth switching apparatus 1000 provided in some embodiments of the present disclosure. The device may include an acquisition unit 1001 and an adjustment unit 1002.

The acquisition unit 1001 is configured to receive the prompt information through the first Bluetooth connection in a case where a first Bluetooth connection has been established between the electronic device and the Bluetooth device. The prompt information is configured to indicate that the connection between the electronic device and the Bluetooth device switches from the first Bluetooth connection to the second Bluetooth connection, where the first Bluetooth connection and the second Bluetooth connection are different Bluetooth connections.

The adjustment unit 1002 is configured to, based on the prompt information, increase the frequency of sending or scanning the Bluetooth connection information by the Bluetooth device, where the Bluetooth connection information is configured for establishing the second Bluetooth connection.

Furthermore, the Bluetooth communication mode corresponding to the second Bluetooth connection is the low energy Bluetooth communication mode. The Bluetooth connection information includes the low energy Bluetooth communication broadcast. The low energy Bluetooth communication broadcast is used to establish the low energy Bluetooth communication. The Bluetooth device sends the low energy Bluetooth communication broadcast based on the first parameter. The adjustment unit 1002 is also configured to perform at least one of reducing the sending interval of the low energy Bluetooth communication broadcast, increasing the duty ratio of the sending duration of the low energy Bluetooth communication broadcast, and increasing the sub-bandwidths used for the sending operation of the low energy Bluetooth communication broadcast.

Furthermore, the adjustment unit 1002 is also configured to set the sending interval of the low energy Bluetooth communication broadcast to the minimum interval allowed by the protocol of the low energy Bluetooth communication mode.

Furthermore, the Bluetooth communication mode corresponding to the second Bluetooth connection is the classic Bluetooth communication mode. The Bluetooth connection information includes the page request used to establish the classic Bluetooth communication. The Bluetooth device scans the page request sent by the electronic device based on the first parameter. The adjustment unit is also configured to increase the Bluetooth bandwidth applied to the page request scanning operation and adjust at least one of the scanning parameters for the page request. The scanning parameters include at least one of the scanning interval and the scanning duration.

Furthermore, the adjustment unit 1002 is also configured to stop the first operation and allocate the bandwidth corresponding to the first operation for the page request scanning operation, where the first operation and the page request scanning operation share the Bluetooth bandwidth. For example, the first operation is the sending operation of the low energy Bluetooth communication broadcast, and the low energy Bluetooth communication broadcast is used for establishing low energy Bluetooth communication.

Furthermore, the adjustment unit 1002 is also configured to perform at least one of reducing the scanning interval of the page request and increasing the scanning duration of the page request.

Those skilled in the art will clearly understand that, for the sake of convenience and brevity, the specific working processes of the above-described devices and modules may refer to the corresponding processes in the previous method embodiments, which will not be repeated here.

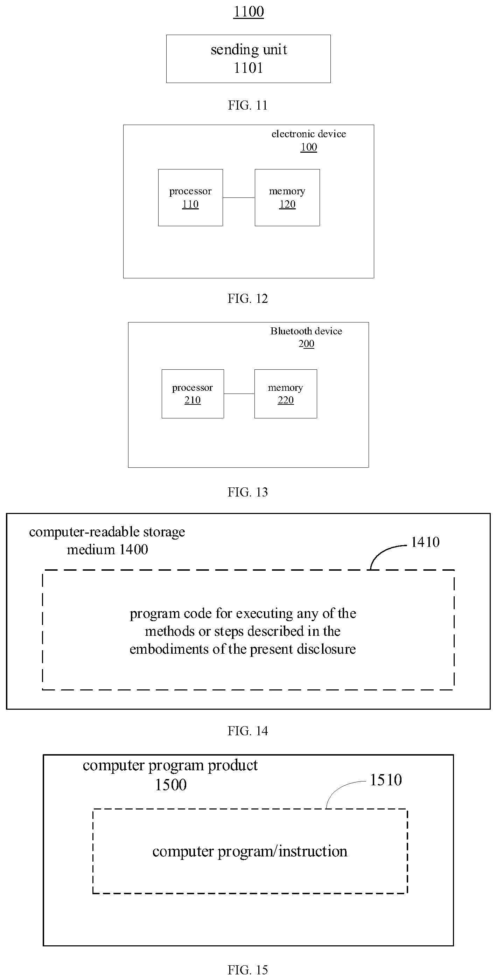

Referring to FIG. 11, FIG. 11 is a block diagram of a Bluetooth switching apparatus 1100 provided in some embodiments of the present disclosure. The device may include a sending unit 1101.

The sending unit 1101 is configured to, in a case where a first Bluetooth connection has been established between the electronic device and the Bluetooth device, send the prompt information to the Bluetooth device through the first Bluetooth connection, indicating the Bluetooth device should increase the frequency of sending or scanning the Bluetooth connection information. The Bluetooth connection information is used for establishing the second Bluetooth connection. The prompt information is used to indicate that the connection between the electronic device and the Bluetooth device switches from the first Bluetooth connection to the second Bluetooth connection, where the first Bluetooth connection and the second Bluetooth connection are different Bluetooth connections.

Furthermore, the sending unit 1101 is configured to, in a case where a first Bluetooth connection has been established between the electronic device and the Bluetooth device, detect the specified request. The specified request is used to indicate the establishment of the second Bluetooth connection between the electronic device and the Bluetooth device. Based on the specified request, the sending unit sends the prompt information to the Bluetooth device, indicating the Bluetooth device should set the first parameter to reduce the time required to establish the second Bluetooth connection. The prompt information is used to indicate that the electronic device requests to switch the first Bluetooth connection to the second Bluetooth connection. The Bluetooth device uses the first parameter to send or scan Bluetooth connection information, and the Bluetooth connection information is used for establishing the second Bluetooth connection.

Furthermore, the sending unit 1101 is also configured to increase the frequency of the electronic device scanning or sending the Bluetooth connection information.

Furthermore, the Bluetooth communication mode corresponding to the second Bluetooth connection is the low energy Bluetooth communication mode. The Bluetooth connection information includes the low energy Bluetooth communication broadcast used to establish the low energy Bluetooth communication. The electronic device scans the low energy Bluetooth communication broadcast sent by the Bluetooth device based on the second parameter. The sending unit 1101 is also configured to increase the scanning speed of the low energy Bluetooth communication broadcast.

Furthermore, the sending unit 1101 is also configured to disconnect the first Bluetooth connection and increase the scanning speed of the low energy Bluetooth communication broadcast.

Furthermore, the Bluetooth communication mode corresponding to the second Bluetooth connection is the classic Bluetooth communication mode. The Bluetooth connection information includes the page request used to establish the classic Bluetooth communication. The electronic device uses the second parameter to send the page request. The sending unit 1101 is also configured to increase the Bluetooth bandwidth applied to the page request sending operation.

Furthermore, the sending unit 1101 is also configured to stop the second operation and allocate the bandwidth corresponding to the second operation for the page request sending operation, where the second operation and the page request sending operation share the Bluetooth bandwidth. The second operation is the scanning operation of the low energy Bluetooth communication broadcast, which is used for establishing low energy Bluetooth communication.

Furthermore, the sending unit 1101 is also configured to disconnect the first Bluetooth connection and increase the Bluetooth bandwidth applied to the page request sending operation.

Those skilled in the art will clearly understand that, for the sake of convenience and brevity, the specific working processes of the described devices and modules may refer to the corresponding processes in the previous method embodiments, which will not be repeated here.

In some embodiments provided by this application, the coupling between modules may be electrical, mechanical, or in other forms of coupling.

Additionally, in the various embodiments of the present disclosure, the functional modules may be integrated into a single processing module, or they may physically exist as separate modules, or two or more modules may be integrated into one module. The integrated modules may be implemented either in hardware form or as software functional modules.

Referring to FIG. 12, FIG. 12 is a block diagram of an electronic device provided in some embodiments of the present disclosure. The electronic device 100 may be a smartphone, a tablet, an e-reader, or any other electronic device capable of running applications. The electronic device 100 in the present disclosure may include one or more of the following components: a processor 110, a memory 120, and one or more application programs. The one or more application programs may be stored in the memory 120 and are configured to be executed by one or more processors 110. The one or more program configurations are used to execute the methods described in the previous method embodiments.

The processor 110 may include one or more processing cores. The processor 110 connects various parts of the entire electronic device 100 through various interfaces and lines. By running or executing instructions, programs, code sets, or instruction sets stored in the memory 120, as well as accessing data stored in the memory 120, the processor 110 performs various functions of the electronic device 100 and processes data. In some embodiments, the processor 110 may be implemented using at least one hardware form, such as Digital Signal Processing (DSP), Field-Programmable Gate Array (FPGA), or Programmable Logic Array (PLA). The processor 110 may integrate one or more of a Central Processing Unit (CPU), Graphics Processing Unit (GPU), and a modem. The CPU primarily handles the operating system, user interface, and applications. The GPU is responsible for rendering and drawing the displayed content. The modem is used for processing wireless communication. It is understood that the modem may also be implemented separately from the processor 110 via a communication chip.

The memory 120 may include Random Access Memory (RAM) and may also include Read-Only Memory (ROM). The memory 120 is used to store instructions, programs, code, code sets, or instruction sets. The memory 120 may include both a program storage area and a data storage area. The program storage area may store instructions for implementing the operating system, instructions for implementing at least one function (such as touch functionality, sound playback functionality, image playback functionality, etc.), and instructions for implementing the various method embodiments described below. The data storage area may also store data created by the terminal 100 during use (such as contacts, audio and video data, chat logs, etc.).

Referring to FIG. 13, FIG. 13 is a block diagram of a Bluetooth device 200 provided in some embodiments of the present disclosure. The Bluetooth device 200 may be a Bluetooth headphone, a Bluetooth speaker, a smart wearable device, or other similar devices. The Bluetooth device 200 in the present disclosure may include one or more of the following components: a processor 210, a memory 220, and one or more application programs. The one or more application programs may be stored in the memory 220 and are configured to be executed by one or more processors 210. The one or more application programs are configured to execute the methods described in the previous method embodiments.

Referring to FIG. 14, FIG. 14 is a block diagram of a computer-readable storage medium 1400 provided in some embodiments of the present disclosure. The computer-readable medium 1400 stores a program code. The program code may be invoked by a processor to execute the methods described in the aforementioned embodiments.

The computer-readable storage medium 1400 may be an electronic storage device such as flash memory, EEPROM (Electrically Erasable Programmable Read-Only Memory), EPROM, hard drives, or ROM. In some embodiments, the computer-readable storage medium 1400 includes a non-volatile computer-readable medium. The computer-readable storage medium 1400 has storage space for the program code 1410 that executes any of the methods or steps described in the aforementioned embodiments. The program code 1410 may be read from or written to one or more computer program products. For example, the program code 1410 may be compressed in an appropriate format.

Referring to FIG. 15, FIG. 15 shows a block diagram of a computer program product 1500 provided in some embodiments of the present disclosure. The computer program product 1500 includes a computer program/instruction 1510, which, when executed by a processor, performs the steps of the methods described above.

In summary, in the embodiments of the present disclosure, in a case where a first Bluetooth connection has been established between the electronic device and the Bluetooth device, the Bluetooth device receives the prompt information, indicating that the electronic device requests to switch the first Bluetooth connection to the second Bluetooth connection. To accelerate the establishment of the second Bluetooth connection, the first parameter is set. The Bluetooth device send or scan the Bluetooth connection information based on the first parameter. The Bluetooth connection information is used for establishing the second Bluetooth connection. Therefore, when the electronic device prepares to switch networks, it may notify the Bluetooth device, enabling the Bluetooth device to set the targeted first parameter in order to reduce the time required to establish the second Bluetooth connection and speed up the establishment of the second Bluetooth connection between the electronic device and the Bluetooth device.

Assuming the electronic device is a smartphone and the Bluetooth device is a headphone, for the scenario where the smartphone switches from the BT to LE Audio, by notifying the headphone in advance that the LE Audio functionality will be used, the headphone begins high-frequency broadcasting. At the same time, the smartphone performs high-frequency scanning. This approach not only accelerates the speed of establishing the LE Audio connection but also saves power on the headphone, as the headphone does not need to keep the LE broadcast continuously on. For the scenario where the smartphone switches from LE Audio to BT, by notifying the headphone in advance that the BT functionality will be used next, the headphone adjusts its page scan parameters to speed up the BT connection. This improves the overall experience of switching between BT and LE Audio for True Wireless Stereo (TWS) headphones and smartphones, thus enhancing the product's competitiveness.

Finally, it should be noted that the above embodiments are provided to illustrate the technical solutions of the present disclosure, rather than to limit them. Although the present disclosure describes in detail with reference to the previous embodiments, those skilled in the art will understand that modifications may be made to the technical solutions described in the previous embodiments, or certain technical features may be equivalently replaced. These modifications or replacements do not depart from the essence of the corresponding technical solutions, nor do they depart from the spirit and scope of the technical solutions of the embodiments of the present disclosure.

## Claims

1. A Bluetooth switching method, **characterized in that** the method is applied to a Bluetooth device in a communication system, the communication system further comprises an electronic device, and the method comprises:
receiving, in a case where a first Bluetooth connection has been established between the electronic device and the Bluetooth device, prompt information through the first Bluetooth connection, where the prompt information is configured to indicate that a connection between the electronic device and the Bluetooth device should be switched from the first Bluetooth connection to a second Bluetooth connection, wherein the first Bluetooth connection and the second Bluetooth connection are different Bluetooth connections;
increasing, based on the prompt information, a frequency of sending or scanning Bluetooth connection information by the Bluetooth device, wherein the Bluetooth connection information is configured for establishing the second Bluetooth connection.

2. The method as claimed in claim 1, **characterized in that** the second Bluetooth connection is a low energy Bluetooth connection, the Bluetooth connection information comprises a low energy Bluetooth communication broadcast applied to establish the low energy Bluetooth connection, and the increasing a frequency of sending or scanning the Bluetooth connection information by the Bluetooth device comprises at least one of:
reducing a sending interval of the low energy Bluetooth communication broadcast, increasing a duty ratio of a sending duration of the low energy Bluetooth communication broadcast, and increasing a sub-bandwidth applied to a sending operation of the low energy Bluetooth communication broadcast.

3. The method as claimed in claim 2, **characterized in that** the reducing the sending interval of the low energy Bluetooth communication broadcast comprises:
setting the sending interval of the low energy Bluetooth communication broadcast to a minimum interval allowed by a protocol of the low energy Bluetooth communication mode.

4. The method as claimed in claim 1, **characterized in that** a Bluetooth communication mode corresponding to the second Bluetooth connection is a classic Bluetooth communication mode, and the Bluetooth connection information includes a page request applied to establish the classic Bluetooth communication mode, and the increasing a frequency of sending or scanning the Bluetooth connection information by the Bluetooth device comprises at least one of:
increasing a sub-bandwidth applied to a page request scanning operation and adjusting a scanning parameter for the page request, wherein the scanning parameter includes at least one of a scanning interval and a scanning duration.

5. The method as claimed in claim 4, **characterized in that** the increasing a sub-bandwidth applied to a page request scanning operation comprises:
stopping a first operation and allocating the sub-bandwidth corresponding to the first operation for the page request scanning operation, wherein the first operation and the page request scanning operation share a Bluetooth bandwidth.

6. The method as claimed in claim 5, **characterized in that** the first operation is a sending operation of a low energy Bluetooth communication broadcast, and the low energy Bluetooth communication broadcast is configured for establishing a low energy Bluetooth connection.

7. The method as claimed in claim 4, **characterized in that** the adjusting the scanning parameter for the page request comprises at least one of:
reducing the scanning interval of the page request and increasing the scanning duration of the page request.

8. A Bluetooth switching method, **characterized in that** the method applied to an electronic device in a communication system, the communication system further comprises a Bluetooth device, and the method comprises:
sending, in a case where a first Bluetooth connection has been established between the electronic device and the Bluetooth device, prompt information to the Bluetooth device through the first Bluetooth connection, indicating the Bluetooth device should increase a frequency of sending or scanning Bluetooth connection information by the Bluetooth device,
wherein the Bluetooth connection information is applied to establish a second Bluetooth connection, and the prompt information is configured to indicate that the connection between the electronic device and the Bluetooth device should be switched from the first Bluetooth connection to a second Bluetooth connection, wherein the first Bluetooth connection and the second Bluetooth connection are different Bluetooth connections.

9. The method as claimed in claim 8, **characterized in that**, after sending the prompt information to the Bluetooth device, the method further comprises:
increasing a frequency of scanning or sending the Bluetooth connection information by the electronic device.

10. The method as claimed in claim 9, **characterized in that** a Bluetooth communication mode corresponding to the second Bluetooth connection is a low energy Bluetooth communication mode, and the Bluetooth connection information comprises a low energy Bluetooth communication broadcast applied to establish a low energy Bluetooth communication, and the increasing a frequency of scanning or sending the Bluetooth connection information by the electronic device comprises:
increasing a scanning speed of the low energy Bluetooth communication broadcast.

11. The method as claimed in claim 10, **characterized in that** the increasing a scanning speed of the low energy Bluetooth communication broadcast comprises:
disconnecting the first Bluetooth connection and increasing the scanning speed of the low energy Bluetooth communication broadcast.

12. The method as claimed in claim 9, **characterized in that** the Bluetooth communication mode corresponding to the second Bluetooth connection is a classic Bluetooth communication mode, and the Bluetooth connection information comprises a page request applied to establish the classic Bluetooth communication mode, and the increasing a frequency of scanning or sending the Bluetooth connection information by the electronic device comprises:
increasing a sub-bandwidth applied to a page request sending operation.

13. The method as claimed in claim 12, **characterized in that** the increasing the sub-bandwidth applied to the page request sending operation comprises:
stopping a second operation and allocating the sub-bandwidth corresponding to the second operation for the page request sending operation, wherein the second operation and the page request sending operation share a Bluetooth bandwidth.

14. The method as claimed in claim 13, **characterized in that** the second operation is a scanning operation of a low energy Bluetooth communication broadcast, and the low energy Bluetooth communication broadcast is configured for establishing a low energy Bluetooth communication.

15. The method as claimed in claim 12, **characterized in that** the increasing the sub-bandwidth applied to the page request sending operation comprises:
disconnecting the first Bluetooth connection and increasing the sub-bandwidth applied to the page request sending operation.

16. A Bluetooth switching apparatus, **characterized in that** the apparatus is applied to a Bluetooth device in a communication system, the communication system further comprises an electronic device, and the apparatus comprises:
an acquisition unit, configured to receive, in a case where a first Bluetooth connection has been established between the electronic device and the Bluetooth device, prompt information through the first Bluetooth connection, where the prompt information is configured to indicate that a connection between the electronic device and the Bluetooth device should be switched from the first Bluetooth connection to a second Bluetooth connection, wherein the first Bluetooth connection and the second Bluetooth connection are different Bluetooth connections; and
an adjustment unit, configured to increase, based on the prompt information, a frequency of the sending or scanning Bluetooth connection information by the Bluetooth device, wherein the Bluetooth connection information is applied to establish the second Bluetooth connection.

17. A Bluetooth switching apparatus, **characterized in that** the apparatus is applied to an electronic device in a communication system, the communication system further comprises a Bluetooth device, and the apparatus comprises:
a sending unit, configured to send, in a case where a first Bluetooth connection has been established between the electronic device and the Bluetooth device, prompt information to the Bluetooth device through the first Bluetooth connection, indicating the Bluetooth device should increase a frequency of sending or scanning Bluetooth connection information by the Bluetooth device, wherein the Bluetooth connection information is applied to establish the second Bluetooth connection, and the prompt information is configured to indicate that a connection between the electronic device and the Bluetooth device should be switched from the first Bluetooth connection to a second Bluetooth connection, wherein the first Bluetooth connection and the second Bluetooth connection are different Bluetooth connections.

18. A Bluetooth device, **characterized in that** the device is applied to a communication system, the communication system further comprises an electronic device, and the Bluetooth device comprises:
one or more processors;
a memory;
one or more application programs, wherein the one or more application programs are stored in the memory and are configured to be executed by the one or more processors, and the one or more application programs are configured to perform the method as claimed in any one of claims 1-7.

19. An electronic device, **characterized in that** the electronic device is applied to a communication system, the communication system further comprises a Bluetooth device, the electronic device comprises:
one or more processors;
a memory;
one or more application programs, wherein the one or more application programs are stored in the memory and are configured to be executed by the one or more processors, and the one or more application programs are configured to perform the method as claimed in any one of claims 8-15.

20. A computer-readable medium, **characterized in that** the computer-readable medium stores a program code executable by a processor, which, when executed by the processor, causes the processor to perform the method as claimed in any one of claims 1-7.
